# FASCICULE DE BREVET EUROPEEN

(11) **EP 4 183 612 B1**
(45) Date de publication et mention de la délivrance du brevet: **07.05.2025**
(21) Numéro de dépôt: 22208980.7
(22) Date de dépôt: 23.11.2022
(51) Int. Cl.: B60K 35/00, B60K 35/10, B60K 35/21, B60K 35/28

(54) **ELÉMENT DE GARNISSAGE COMPRENANT DES ZONES RÉTROÉCLAIRÉES COMMUTABLES**
FÜLLKÖRPER MIT SCHALTBAREN HINTERLEUCHTETEN BEREICHEN
TRIM ELEMENT COMPRISING SWITCHABLE BACKLIT AREAS

(30) Priorité: 23.11.2021 FR 2112382
(43) Date de publication de la demande: 24.05.2023
(73) Titulaire: Faurecia Intérieur Industrie, 92000 Nanterre (FR)
(72) Inventeur: CUVILLIER, Christophe, 95310 SAINT-OUEN-L'AUMÔNE (FR); BROUSSELLE, Armand, 75015 PARIS (FR)
(74) Mandataire: Novagraaf Group

(56) Documents cités:
- DE-A1- 102013 223 244
- FR-A1- 3 111 857
- US-A1- 2013 027 953

## Description

La présente invention concerne un élément de garnissage de véhicule, comprenant une couche de revêtement définissant une surface externe et une surface interne, opposée à la surface externe, ladite couche de revêtement comprenant au moins deux zones de motif rétroéclairées distinctes, dans lesquelles ladite couche de revêtement est au moins en partie translucide de sorte à laisser passer la lumière de la surface interne à la surface externe, l'élément de garnissage comprenant en outre au moins un module d'éclairage s'étendant du côté de la surface interne de la couche de revêtement, ledit module d'éclairage comprenant au moins une source de lumière et un premier guide de lumière agencé pour guider la lumière de la source de lumière vers les zones rétroéclairées de la couche de revêtement.

L'invention concerne également un procédé de réalisation d'un tel élément de garnissage.

Il est connu de prévoir sur la surface externe d'un élément de garnissage des zones rétroéclairées afin d'illuminer des motifs, tels que des pictogrammes ou des motifs décoratifs, sur cette surface externe.

Pour ce faire, la couche de revêtement comprend des zones translucides présentant la forme des motifs à afficher et des sources de lumières sont disposées en regard de ces zones translucides du côté intérieur de la couche de revêtement afin d'éclaire les zones translucides. Afin d'assurer un bon éclairage des zones rétroéclairées, les sources de lumière sont disposées dans des « boîtes à lumière » s'étendant entre les sources de lumière et les zones rétroéclairées. Les parois de la boîte à lumière sont réfléchissantes de sorte que les rayons lumineux issus des sources de lumière sont transmis aux zones rétroéclairées par les boîtes à lumière.

Cependant, afin d'assurer une bonne homogénéisation de la lumière lorsqu'elle atteint la surface externe de l'élément de garnissage, il est nécessaire de prévoir une certaine distance entre les sources de lumière et les zones rétroéclairées, ce qui augmente l'épaisseur de l'élément de garnissage et son encombrement.

US 2013/0027953 A1 divulgue un afficheur d'indicateurs d'un véhicule selon l'état de l'art.

Pour remédier à cet inconvénient, il a été proposé de placer les sources de lumière contre la surface interne de la couche de lumière et de guider la lumière jusqu'aux zones rétroéclairées par des guides de lumière. Cependant, la qualité de la lumière atteignant les zones rétroéclairées n'est alors pas satisfaisante.

Il a aussi été proposé de remplacer les sources de lumière et les zones rétroéclairées par un écran à cristaux liquide (LCD) disposé sous la couche de revêtement et affichant des images sur la surface externe de la couche de revêtement. Cela permet en outre de placer des motifs distincts très proches les uns des autres.

Cependant, un tel écran ne donne pas entière satisfaction car il nécessite l'ajout d'une fenêtre en regard de l'écran dans la couche de revêtement, ce qui rompt la continuité d'aspect de la couche de revêtement, même si la fenêtre est agencée pour présenter un aspect similaire à celui du reste de la couche de revêtement. En outre, la différence de contraste entre les zones éclairées et les zones non éclairées sur l'écran sont visibles au travers de la fenêtre, ce qui rend l'intégration de l'écran dans l'élément de garnissage trop visible depuis l'extérieur de l'élément de garnissage.

L'un des buts de l'invention est de pallier ces inconvénients en proposant un élément de garnissage peu encombrant, présentant un aspect satisfaisant et permettant d'avoir des motifs rétroéclairés très proches les uns des autres.

A cet effet, l'invention concerne un élément de garnissage du type précité, comprenant en outre un module de commutation s'étendant entre la couche de revêtement et le module d'éclairage, le module de commutation comprenant au moins deux zones d'obturation optique, au moins une zone d'obturation optique s'étendant en regard de chaque zone de motif rétroéclairée de la couche de revêtement et étant configurable entre une position ouverte, dans laquelle ladite zone d'obturation optique laisse passer la lumière du premier guide de lumière du module d'éclairage vers la zone de motif rétroéclairée de la couche de revêtement s'étendant en regard de ladite zone d'obturation optique, et une position fermée, dans laquelle ladite zone d'obturation optique empêche le passage de la lumière du premier guide lumière vers la zone de motif rétroéclairée s'étendant en regard de ladite zone d'obturation optique.

L'utilisation d'un module de commutation permet d'éclairer de façon sélective plusieurs zones rétroéclairées avec un seul module d'éclairage. Cela permet de placer les zones rétroéclairées très proches les unes des autres et de réduire l'encombrement de l'élément de garnissage. En outre, la couche de revêtement présente un aspect uniforme en regard des zones rétroéclairées aussi bien qu'autour de celles-ci, notamment lorsque les zones rétroéclairées ne sont pas illuminées. En d'autres termes, la présence d'une zone rétroéclairée n'est détectable que lorsque celle-ci est illuminée par le module d'éclairage.

L'élément de garnissage selon l'invention peut comprendre une ou plusieurs des caractéristiques suivantes, prises isolément ou selon toute combinaison techniquement envisageable :
- chaque zone d'obturation optique présente une surface supérieure ou égale à la surface de la zone de motif rétroéclairée s'étendant en regard de ladite zone d'obturation optique, chaque zone de motif rétroéclairée étant entourée au moins en partie par une zone opaque empêchant le passage de la lumière de la surface interne à la surface externe de la couche de revêtement,
- la couche de revêtement comprend au moins une couche d'aspect translucide et au moins une couche de masquage s'étendant contre la couche d'aspect, ladite couche de masquage comprenant au moins deux ouvertures, présentant chacune la forme d'une des zones de motif rétroéclairées de la couche de revêtement, chaque zone d'obturation optique du module de commutation s'étendant en regard d'une ouverture de la couche de masquage,
- un deuxième guide de lumière formé par un élément translucide s'étend contre la surface interne de la couche de revêtement, le module de commutation s'étendant contre ledit élément translucide agencé pour guider la lumière passant par ledit module de commutation vers les zones de motif rétroéclairées de la couche de revêtement,
- l'élément de garnissage comprend un support s'étendant autour du module d'éclairage et du module de commutation, ledit support enrobant une partie du premier guide de lumière, ledit support étant réalisé en un matériau réfléchissant,
- le module d'éclairage est monté sur un substrat comprenant au moins un circuit de connexion électrique de la source lumineuse du module d'éclairage, la source lumineuse étant connectée audit circuit de connexion,
- le module de commutation est en outre connecté au circuit de connexion, les zones d'obturation optique étant alimentées électriquement par ledit circuit de connexion électrique, et
- la distance entre les deux zones de motif rétroéclairées est sensiblement comprise entre 0,3 mm et 2 mm.

Selon un autre aspect, l'invention concerne également un procédé de réalisation d'un élément de garnissage tel que décrit ci-dessus, comprenant les étapes suivantes :
- réaliser une couche de revêtement comprenant au moins deux zones de motif rétroéclairées distinctes, dans lesquelles ladite couche de revêtement est au moins en partie translucide de sorte à laisser passer la lumière d'une surface interne à une surface externe de la couche de revêtement,
- réaliser un module de commutation comprenant au moins deux zones d'obturation optique,
- réaliser un module d'éclairage comprenant au moins une source de lumière et un premier guide de lumière,
- assembler la couche de revêtement, le module de commutation et le module d'éclairage en positionnant au moins une zone d'obturation optique du module de commutation en regard de chaque zone de motif rétroéclairée de la couche de revêtement et en positionnant le premier guide de lumière du module d'éclairage pour que la lumière émise par la source de lumière soit guidée vers les zones de motif rétroéclairées de la couche de revêtement en passant par les zones d'obturation optique du module de commutation.

Selon une caractéristique optionnelle du procédé de réalisation, l'étape de positionnement des zones d'obturation optique du module de commutation en regard des zones de motif rétroéclairées de la couche de revêtement comprend les étapes suivantes :
- placer au moins une zone d'obturation optique en position ouverte, au moins une source de lumière étant agencée pour afficher une mire du côté de la surface externe de la couche de revêtement en passant par ladite zone d'obturation optique en position ouverte,
- placer au moins une mire correspondante en regard d'une zone de motif rétroéclairée de la couche de revêtement s'étendant en regard de la zone d'obturation optique en position ouverte,
- utiliser un dispositif d'imagerie pour acquérir au moins une image de la surface externe de la couche de revêtement pour déterminer si la mire affichée par la source de lumière au travers de la zone d'obturation optique en position ouverte est superposée avec la mire en regard de la zone de motif rétroéclairée correspondante,
- si les mires ne sont pas superposées, déplacer le module de commutation par rapport à la couche de revêtement pour superposer les mires avant de fixer définitivement la couche de revêtement, le module de commutation et le module d'éclairage.

D'autres aspects et avantages de l'invention apparaitront à la lecture de la description qui suit, donnée à titre d'exemple et faite en référence aux dessins annexés, dans lesquels :
[Fig 1] - la Fig. 1 est une représentation schématique en coupe d'un élément de garnissage selon un mode de réalisation de l'invention,
[Fig 2] - la Fig. 2 est une représentation schématique en coupe de la couche de revêtement et d'un deuxième guide de lumière de l'élément de garnissage de la Fig. 1,
[Fig 3] - la Fig. 3 est une représentation schématique en coupe d'une partie du module d'éclairage de l'élément de garnissage de la Fig. 1, et
[Fig 4] [Fig 5] [Fig 6] - les Figs. 4 à 6 sont des représentations schématiques en coupe d'une partie d'un élément de garnissage selon un mode de réalisation de l'invention au cours de différentes étapes du procédé de réalisation d'un tel élément de garnissage.

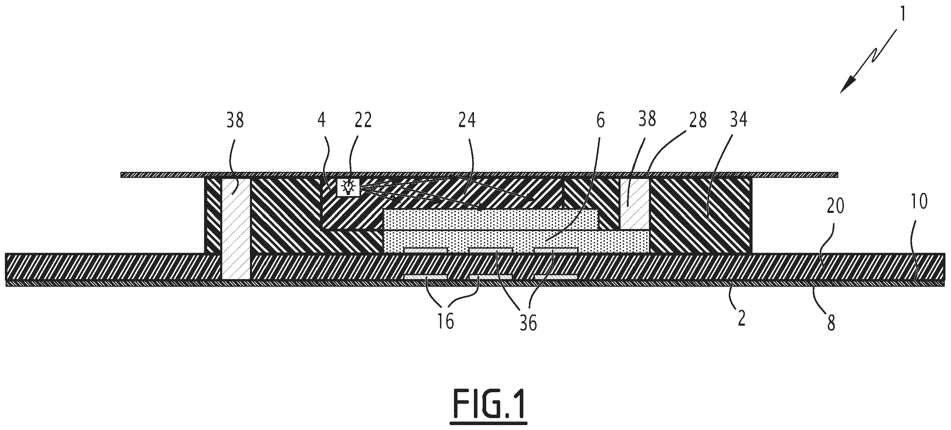

En référence à la Fig. 1, on décrit un élément de garnissage 1 de véhicule comprenant une couche de revêtement 2, un module d'éclairage 4 et un module de commutation 6. Un tel élément de garnissage 1 forme par exemple tout ou partie d'un panneau de porte, d'une console centrale, d'une planche de bord de véhicule ou autre.

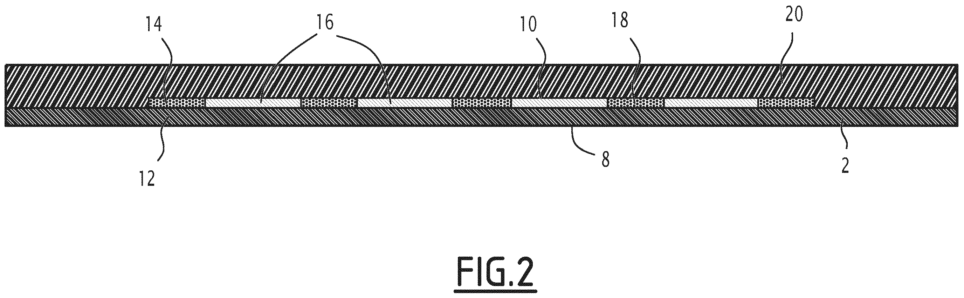

La couche de revêtement 2 comprend une surface externe 8, formant au moins une partie de la surface visible de l'élément de garnissage 1, et une surface interne 10, opposée à la surface externe 8 et s'étendant du côté intérieur de l'élément de garnissage 1. Ainsi, la surface externe 8 confère son aspect à au moins une partie de l'élément de garnissage 1 tandis que la surface interne 10 est destinée à être tournée vers la partie du véhicule sur laquelle l'élément de garnissage 1 est destiné à être installé. La couche de revêtement 2 peut comprendre plusieurs couches. Selon le mode de réalisation représenté sur les Figs. 1 et 2, la couche de revêtement 2 comprend ainsi au moins une couche d'aspect 12, définissant la surface externe de la couche de revêtement 2, et une couche de masquage 14, définissant la surface interne 10 de la couche de revêtement 2. Comme cela sera décrit ultérieurement en référence à un autre mode de réalisation, la couche de revêtement 2 peut comprendre d'autres couches.

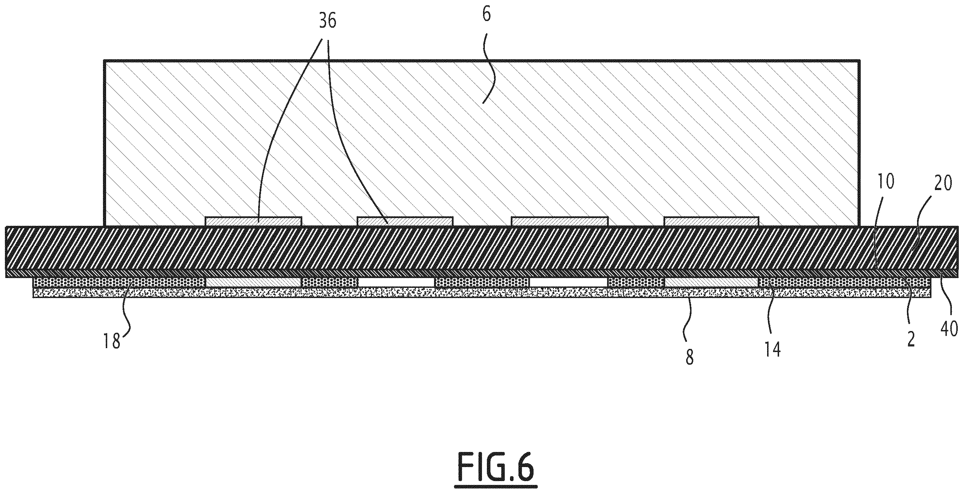

La couche d'aspect 12 est par exemple sensiblement continue et couvre tout ou partie de l'élément de garnissage 1. A l'opposé de la surface externe 8, la couche d'aspect 12 comprend une surface d'envers sur laquelle s'étend la couche de masquage 14. La couche d'aspect 12 est par exemple sensiblement translucide, c'est-à-dire qu'elle laisse passer la lumière de la surface d'envers à la surface externe 8. Par translucide, on entend un taux de transmission de la lumière compris entre 5% et 100%, 100% correspondant à une couche transparente. La translucidité de la couche d'aspect 12 peut lui être conférée soit du fait du matériau formant la couche d'aspect 12, soit du fait de son épaisseur. En variante, seules certaines zones de la couche d'aspect 12 sont translucides, par exemple en réalisant des perforations dans la couche d'aspect 12 dans ces zones. La couche d'aspect 12 est par exemple formée par une peau pouvant être formée en tout matériau adéquat, tel qu'un matériau plastique, un matériau ligneux ou autre. Selon le mode de réalisation des Figs. 1, 2 et 4, la couche d'aspect 12 est formée par un substrat présentant une épaisseur sensiblement égale ou supérieure à 0,175 mm et par exemple sensiblement égale ou inférieure à 2 mm. La couche d'aspect 12 peut comprendre du côté de la surface externe 8 une protection anti-rayures et/ou tout autre traitement adapté pour préserver la couche d'aspect 12. La couche d'aspect 12 est par exemple réalisée en un matériau plastique, tel que du polycarbonate (PC), du polytéréphtalate d'éthylène (PET), du polyméthacrylate de méthyle (PMMA) ou du polycarbonate / polyméthacrylate de méthyle (PC/PMMA). En variante, comme représenté sur la Fig. 6, la couche d'aspect 12 peut être une simple couche de vernis appliquée sur la couche de masquage 14.

La couche de masquage 14 s'étend sur la surface d'envers de la couche d'aspect 12 et comprend au moins deux zones de motif rétroéclairées 16 et au moins une zone opaque 18.

Chaque zone de motif rétroéclairée 16 est au moins en partie translucide, voire transparente, de sorte à laisser passer la lumière au travers la couche de masquage 14 de la surface interne 10 jusqu'à la couche d'aspect 12 dans la ou les parties translucides de chaque zone de motif rétroéclairée 16. Selon un mode de réalisation, les zones de motif rétroéclairées 16 sont formées par des ouvertures traversant la couche de masquage 14, comme cela sera décrit ultérieurement. Les zones de motif rétroéclairées 16 sont disposées en regard d'une zone translucide de la couche d'aspect 12 de sorte que la lumière passant par une zone de motif rétroéclairée 16 est transmise jusqu'à la surface externe 8 de la couche de revêtement 2 de sorte à être visible depuis l'extérieur de l'élément de garnissage 1. Chaque zone de motif rétroéclairée 16 peut avoir toute forme souhaitée dépendant de ce que l'on souhaite afficher sur la surface externe 8 de la couche de revêtement 2. Ainsi, une zone de motif rétroéclairée 16 présente par exemple la forme d'un pictogramme ou d'un motif à afficher. Une zone de motif rétroéclairée 16 peut laisser passer la lumière sur toute sa surface, par exemple en étant formée d'une ouverture unique. En variante, à l'intérieur d'une zone de motif rétroéclairée 16, des parties laissant passer la lumière et des parties bloquant ce passage peuvent être prévues pour définir la forme à afficher sur la surface externe 8 de la couche de revêtement 2.

La forme des zones de motif rétroéclairées 16 peut différer d'une zone de motif rétroéclairée 16 à une autre. La couche de revêtement 2 peut comprendre plus de deux zones de motif rétroéclairées 16, en fonction de ce que l'on souhaite afficher sur la surface externe 8 de la couche de revêtement 2.

La zone opaque 18 est agencée pour empêcher le passage de la lumière de la surface interne 10 vers la couche d'aspect 12 au travers la zone opaque 18. Par opaque, on entend un taux de transmission inférieur à 5%, de préférence proche de ou égal à 0%. Cette opacité est obtenue par le matériau utilisé pour réaliser la zone opaque 18 et/ou par l'épaisseur de la couche de masquage 14. Cependant, afin de limiter l'encombrement de l'élément de garnissage, il est préférable que l'opacité soit obtenue en utilisant un matériau opaque même à très faible épaisseur. La zone opaque 18 s'étend au moins entre les zones de motif rétroéclairées 16 de sorte à séparer celles-ci. Par séparer, on entend que les zones de motif rétroéclairées 16 ne communiquent pas entre elles de sorte que la lumière passant par une zone de motif rétroéclairée 16 n'est pas transmise à une autre zone de motif rétroéclairée. Selon l'invention, et comme cela sera décrit ultérieurement, les zones de motif rétroéclairées peuvent être rapprochées les unes des autres, tout en étant séparées par une zone opaque 18. Par rapprochées, on entend que la distance entre deux zones de motif rétroéclairées est par exemple sensiblement comprise entre 0,3 mm et 2 mm, cette distance étant mesurée entre les deux points les plus proches l'un de l'autre des zones de motif rétroéclairées. Comme représenté sur les figures, la zone opaque 18 peut s'étendre en outre autour des zones de motif rétroéclairées 16 et former l'ensemble de la couche de masquage 14 en dehors des zones de motif rétroéclairées 16. Plusieurs zones opaques 18 peuvent être prévues, par exemple lorsqu'une zone de motif rétroéclairées s'étend sur toute une partie de l'élément de garnissage nécessitant une interruption de la zone opaque 18.

Comme représenté sur la Fig. 2 et comme décrit précédemment, les zones de motifs rétroéclairées 16 peuvent être formées par des ouvertures dans la zone opaque 18, la forme des ouvertures définissant la forme des zones de motif rétroéclairées. Ainsi, lorsqu'une zone de motif rétroéclairée 16 laisse passer la lumière sur toute sa surface, cette zone est formée par une seule ouverture dans la zone opaque 18. Lorsqu'une zone de motif rétroéclairée comprend des parties laissant passer la lumière et des parties bloquant le passage de la lumière, cette zone est formée par plusieurs ouvertures dans la zone opaque 18, chaque ouverture présentant la forme d'une des parties laissant passer la lumière de la zone de motif rétroéclairées et les parties bloquant le passage de la lumière étant formées par des parties de zone opaque 18 autour de ces ouvertures.

Selon un mode de réalisation, la couche de masquage 14 est obtenue par impression, par exemple d'une encre opaque, sur la surface d'envers de la couche d'aspect 12, des parties de la surface d'envers n'étant pas imprimées pour définir les ouvertures formant les zones de motif rétroéclairées. Une telle couche de masquage 14 présente par exemple un taux d'absorption de la lumière supérieur ou égal à 95%. Selon un mode de réalisation particulier, les zones de motif rétroéclairées 16 sont imprimées avec un matériau translucide, par exemple une encre colorée, afin de conférer un aspect particulier à la lumière passant par les zones de motif rétroéclairées 16 et affichée sur la surface externe 8 de la couche de revêtement 2. Différentes couleurs peuvent par exemple être prévues pour les différentes zones de motif rétroéclairées 16 afin que les différents pictogrammes ou motifs affichés sur la surface externe 8 de la couche de revêtement 2 présentent un aspect différents les uns des autres.

Comme indiqué précédemment, la couche de revêtement 2 peut comprendre d'autres couches, comme cela sera décrit ultérieurement. En variante, la couche de revêtement 2 ne comprend qu'une seule couche comprenant les zones de motif rétroéclairées 16 et la ou les zones opaques 18 qui s'étendent alors de la surface interne 10 à la surface externe 8.

Selon un mode de réalisation, un élément translucide 20 s'étend contre la surface interne 10 de la couche de revêtement 2 et forme un guide de lumière vers la couche de revêtement 2, comme cela sera décrit ultérieurement. Cet élément translucide 20 est par exemple réalisé en un matériau plastique translucide, par exemple une résine injectée sur la surface interne 10 de la couche de revêtement 2. Le matériau de l'élément translucide 20 est par exemple du polycarbonate (PC), du polytéréphtalate d'éthylène (PET), du polyméthacrylate de méthyle (PMMA), du polycarbonate / polyméthacrylate de méthyle (PC/PMMA), de l'acrylonitrile butadiène styrène (ABS) ou autre. L'élément translucide 20 présente par exemple une épaisseur inférieure ou égale à 2 mm et un indice de réfraction sensiblement compris entre 1,2 et 1,9. L'élément translucide 20 est par exemple légèrement fumé pour conférer un aspect particulier à la lumière le traversant puis traversant les zones de motif rétroéclairées 16 pour être visible sur la surface externe 8 de la couche d'aspect 2.

Le module d'éclairage 4 s'étend du côté de la surface interne 10 de la couche de revêtement 2 au moins en regard des zones de motif rétroéclairées 16 de la couche de revêtement et est agencé pour émettre de la lumière vers ces zones de motifs rétroéclairées 16 afin d'afficher des pictogrammes ou des motifs éclairés sur la surface externe 8 de la couche de revêtement 2.

Le module d'éclairage 4 comprend au moins une source de lumière 22 et un premier guide de lumière 24 agencé pour guider la lumière émise par la source de lumière 22 vers les zones de motif rétroéclairées 16 de la couche de revêtement 2.

La source de lumière 22 est par exemple formée par une diode électroluminescente émettant de la lumière dans le domaine visible. Il est entendu que le module d'éclairage 4 peut comprendre plusieurs sources de lumière 22. Avantageusement, cependant, une seule source de lumière 22 est utilisée pour illuminer plusieurs zones de motif rétroéclairées 16, voire toutes les zones de motif rétroéclairées 16, au moyen du premier guide de lumière 24, ce qui permet de réduire la consommation d'énergie du module d'éclairage 4.

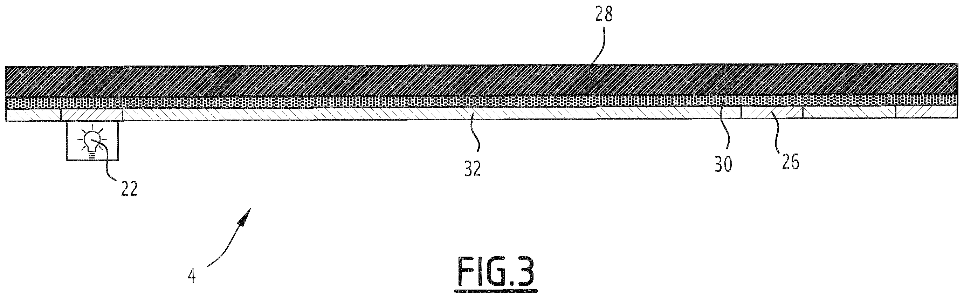

Comme représenté sur la Fig. 3, la ou chaque source de lumière 22 est par exemple montée sur un circuit électrique 26 d'alimentation, plus particulièrement sur des bornes de connexion du circuit électrique 26. Un tel circuit électrique 26 est par exemple formé par des pistes, par exemple en encre argentique, carbone ou cuivre, imprimées sur un substrat 28 ou sur une couche opaque 30, elle-même imprimée sur le substrat 28. Le substrat 28 est par exemple formé par un matériau plastique tel que du PC, PET, PMMA ou PC/PMMA et présente une épaisseur supérieure ou égale à 0,175 mm et par exemple inférieure ou égale à 2 mm. Le substrat 28 peut être conformé pour présenter toute forme souhaitée, par exemple une forme tridimensionnelle épousant la forme de l'élément de garnissage 1 du côté intérieur de celui-ci. La mise en forme du substrat 28 est par exemple réalisée par thermoformage.

En variante, le substrat 28 peut être formé par une carte de circuit imprimé, ou PCB pour « Printed Circuit Board », intégrant le circuit électrique 26. Un tel substrat est rigide et est par exemple réalisé en matériau composite à base de résine époxy, par exemple renforcée par des fibres de verre (composite FR-4) ou renforcée par des fibres de verre et de cellulose (composite CEM-1). La carte de circuit imprimée présente par exemple une épaisseur sensiblement comprise entre 0,8 mm et 2 mm.

La couche opaque 30 est par exemple de même nature que la couche de masquage 14 s'étendant sur la surface d'envers de la couche d'aspect 12 et présente un taux d'absorption supérieur ou égal à 95%. En outre, la couche opaque 30 et/ou le substrat 28 sont non conducteurs.

Selon un mode de réalisation, une couche réfléchissante 32 s'étend sur la couche opaque 30, par exemple uniquement en regard du module d'éclairage 4 et/ou autour, sur ou sous le circuit électrique 26, comme représenté sur la Fig. 3. En d'autres termes, la lumière circulant dans le module d'éclairage 4 et orientée vers le substrat 28 est réfléchie par la couche réfléchissante 32. La couche réfléchissante 32 présente un taux de réflexion supérieur ou égal à 95%. En variante, la ou les sources de lumière 22 sont montées directement sur une carte de circuits imprimés.

La lumière émise par la ou les sources de lumière 22 est injectée dans le premier guide de lumière 24 qui est agencé guider la lumière vers les zones de motif rétroéclairées 16. Le premier guide de lumière 24 présente une dimension telle que la lumière est harmonisée en arrivant sur la surface externe 8 en fonction des éléments s'étendant entre le premier guide de lumière et la surface externe 8. L'harmonisation de la lumière s'obtient notamment grâce aux réflexions à l'intérieur du guide de lumière 24. Pour ce faire, la ou les sources de lumière 22 ne sont par exemple pas agencées directement en regard des zones de motif rétroéclairées selon la direction de l'épaisseur de l'élément de garnissage, mais sont décalées par rapport à ces zones de motif rétroéclairées 16 et le premier guide de lumière 24 s'étend sur le substrat 28 ou sur la couche opaque 30, de préférence sur la couche réfléchissante 32, de ces sources de lumière 22 jusqu'à une zone en regard des zones de motif rétroéclairées 16 selon la direction de l'épaisseur de l'élément de garnissage de sorte à amener la lumière des sources de lumière 22 jusqu'à cette zone, dans laquelle la lumière quitte le premier guide de lumière 24 pour être dirigée vers les zones de motif rétroéclairées 16. La surface du premier guide de lumière 24 tournée vers la surface externe 8 peut être lisse ou présenter un grainage permettant d'améliorer l'harmonisation ou l'homogénéité de la lumière. Le long de la surface grainée du premier guide de lumière 24, le grainage de la surface du premier guide de lumière 24 peut varier, par exemple en faisant varier sa densité, en prévoyant des grains plus ou moins profonds et/ou en présentant des motifs différents. Le grainage est agencé pour que la lumière présente une homogénéité satisfaisante sur la surface externe 8 de l'élément de garnissage 1.

Selon un mode de réalisation, le module d'éclairage 4 est agencé pour que toute la lumière émise par la ou les sources de lumière 22 soit injectée dans le premier guide de lumière 24 afin d'illuminer toutes les zones de motif rétroéclairées 16. En d'autres termes, l'invention permet d'illuminer l'ensemble des zones de motif rétroéclairées 16 avec un unique module d'éclairage 4, ce qui permet de réaliser des économies d'énergies et de simplifier la structure et la connectique de l'élément de garnissage. A cet effet, le premier guide de lumière 24 est par exemple agencé pour encapsuler la ou les sources de lumière 22. Par encapsuler, on entend que le matériau formant le premier guide de lumière 24 enrobe la ou les sources de lumières 22 de tous les côtés de ces sources de lumière 22 à l'exception de la partie de celles-ci qui sont montées sur le substrat 28.

Le premier guide de lumière 24 est réalisé en un matériau adapté à la transmission de la lumière, tel qu'un matériau plastique transparent. Un tel matériau est par exemple du PC ou du PMMA.

Un support 34 s'étend entre le substrat 28, ou la couche opaque 30, et la couche de revêtement 2, ou l'élément translucide 20, autour du premier guide de lumière 24 et du module de commutation 6, comme représenté sur la Fig. 1. Le support 34 confère par exemple sa forme et sa rigidité à l'élément de garnissage 1. Le support 34 encapsule une partie du premier guide de lumière 24 et du module de commutation 6. Le support 34 est notamment agencé pour empêcher la lumière issue du module d'éclairage 4 de « fuiter » vers l'extérieur de l'élément de garnissage 1 en dehors du trajet prévue pour celle-ci au travers du module de commutation 6 et des zones de motif rétroéclairée 16. Le support 34 s'étend ainsi autour du premier guide de lumière 24 et du module de commutation 6, et notamment sur la partie du premier guide de lumière 24 qui n'est pas recouverte par le module de commutation 6, comme cela sera décrit ultérieurement. Le support 34 est par exemple réalisé en un matériau réfléchissant, présentant un taux de réflexion de la lumière supérieur ou égal à 75% de sorte que la lumière circulant dans le premier guide de lumière 24 est réfléchie lorsqu'elle est incidente à une paroi du premier guide de lumière 24 ou du module de commutation 6 qui est recouverte par le support 34, la lumière restant ainsi dans le trajet prévu. En outre, ces réflexions permettent d'harmoniser la lumière dans le premier guide de lumière 24. Le support 34 est par exemple réalisé en un matériau plastique, tel que du PC, PC ABS ou PMMA.

Le module de commutation 6 s'étend entre le module d'éclairage 4 et la couche de revêtement 2, plus particulièrement entre une partie du premier guide de lumière 24 écartée de la source de lumière 22 et en regard des zones de motif rétroéclairées 16 contre l'élément translucide 20, comme représenté sur la Fig. 1. Le module de commutation 6 est par exemple laminé sur le premier guide de lumière 24 et/ou sur le support 34.

Le module de commutation 6 comprend au moins deux zones d'obturation optique 36 s'étendant chacune en regard d'une zone de motif rétroéclairées 16. Plus particulièrement, le module de commutation 6 comprend au moins autant de zones d'obturation optique 36 qu'il y a de zones de motif rétroéclairées 16 et chaque zone de motif rétroéclairée 16 s'étend en regard d'au moins une zone d'obturation 36. Chaque zone d'obturation 36 est configurable entre une position ouverte, dans laquelle la zone d'obturation 36 laisse passer la lumière du module d'éclairage 4 vers la zone de motif rétroéclairée 16 en regard de laquelle la zone d'obturation 36 s'étend, et une position fermée, dans laquelle la zone d'obturation 36 empêche le passage de la lumière du premier guide lumière 24 vers la zone de motif rétroéclairée 16 s'étendant en regard de la zone d'obturation 36. Chaque zone d'obturation 36 présente une surface supérieure ou égale à la surface de la zone de motif rétroéclairée 16 en regard de laquelle la zone d'obturation 36 s'étend de sorte que l'ensemble de cette zone de motif rétroéclairée 16 est illuminée lorsque la zone d'obturation 36 est en position ouverte.

Chaque zone d'obturation optique 36 est pilotable indépendamment des autres zones d'obturation 36, c'est-à-dire que chaque zone d'obturation 36 peut être placée individuellement dans la position ouverte ou dans la position fermée.

Selon un mode de réalisation, un filtre de couleur est placé en regard de chaque zone d'obturation optique 36 ou de certaines zones d'obturation 36 de sorte à laisser passer les longueurs d'onde souhaitées de la lumière issue du module d'éclairage 4 lorsque la zone d'obturation optique 36 correspondante est dans la position ouverte. Cela permet, à partir d'une unique source de lumière blanche, d'éclairer les différentes zones de motif rétroéclairées 16 avec des couleurs différentes, par exemple pour transmettre des informations particulières aux passagers du véhicule.

Selon un mode de réalisation, plusieurs zones d'obturation optique 36 sont prévues pour chaque zone de motif rétroéclairée 16, un filtre de couleur étant associé à chaque zone d'obturation optique 36. Chaque zone d'obturation optique 36 pour une même zone de motif rétroéclairée 16 est alors prévue pour éclairer une partie de la zone de motif rétroéclairée 16 en position ouverte, une autre zone d'obturation optique 36 pour cette même zone de motif rétroéclairée 16 étant prévue pour éclaire une autre partie de la zone de motif rétroéclairée. En agençant de façon adéquate les différentes parties éclairées par différentes zone d'obturation optique 36 et en dimensionnant les zones d'obturation optique 36 pour que toute la zone de motif rétroéclairée 16 soit éclairée par une lumière homogène, par exemple selon le principe des différents pixels d'un écran, il est alors possible d'illuminer une même zone de motif rétroéclairée 16 en différentes couleurs en plaçant une ou plusieurs zones d'obturation optique 36 associées à cette zone de motif rétroéclairée 16 en position ouverte et les autres zones d'obturation optique 36 associées à cette zone en position fermée.

Le module de commutation 6 est par exemple formé par un élément électrochimique ou à cristaux liquides dispersés dans un matériau polymère connu sous le terme de PDLC (pour « Polymer Dispersed Liquid Crital »). Un tel élément est souple et se présente sous la forme d'un film. En variante, le module de commutation peut être rigide en étant formé par exemple par un afficheur LCD à segments, un écran à base de transistors en film mince (TFT pour « Thin Film Transistor »), un verre électrochimique, etc. De tels éléments permettent de former des zones d'obturation optique commutables entre la position ouverte et la position fermée par application d'un courant électrique à ces zones d'obturation optique 36. A cet effet, le module de commutation 6 est par exemple alimenté en électricité au moyen du circuit électrique d'alimentation 26, en passant par un élément de connexion 38 s'étendant dans le support 34, comme représenté sur la Fig. 1. On notera que sur la Fig. 1 un autre élément de connexion 38 est prévu entre la couche de revêtement 2 et le circuit électrique 26, cet élément de connexion 38 pouvant alimenter en électricité la couche de revêtement 2 par exemple lorsque celle-ci comprend un ou plusieurs films capacitifs pour former des surfaces tactiles sur la surface externe 8 de la couche de revêtement 2.

Le fonctionnement de l'élément de garnissage 1 décrit ci-dessus va à présent être décrit.

La ou les sources de lumière 22 sont allumées de sorte à émettre un rayonnement lumineux dans le premier guide de lumière 24 qui amène la lumière jusqu'au module de commutation 6. En fonction de la ou des zones de motif rétroéclairées 16 à éclairer, par exemple en fonction d'un état particulier du véhicule ou d'un élément du véhicule, la ou les zones d'obturation optiques 36 s'étendant en regard de ces zones de motif rétroéclairées 16 sont placées dans la position ouverte. La ou les zones d'obturation optique 36 s'étendant en regard de zones de motif rétroéclairées 16 qui ne doivent pas être éclairées sont laissées dans la position fermée. La lumière passe alors au travers des zones d'obturation optique 36 en position ouverte et pas au travers de celles qui sont en position fermée. La lumière est transmise à l'élément translucide 20 qui forme alors un deuxième guide de lumière transmettant la lumière au(x) zone(s) de motif rétroéclairée(s) 16 qui doivent être éclairées et pas aux autres. C'est notamment grâce à la faible épaisseur de l'élément translucide 20 que la lumière n'est pas transmise entre les différentes zones de motif rétroéclairées. En outre, les zones opaques 18 de la couche de masquage 14 absorbent la lumière et limite ainsi la propagation de la lumière au sein du deuxième guide de lumière, ce qui permet d'éviter les fuites de lumière d'une zone de motif rétroéclairée 16 à une autre.

L'élément translucide 20 permet de protéger le module de commutation 6, notamment de la pression exercée par un utilisateur appuyant sur la surface externe 8 de l'élément de garnissage.

L'éclairage des zones de motif rétroéclairées 16 peut être modulé simplement en faisant passer les zones d'obturation optique 36 souhaitées de la position fermée à la position ouverte et inversement. Comme indiqué précédemment, une seule source de lumière 22 peut être utilisée pour toutes les zones de motif rétroéclairées 16 qui peuvent être placées très proches les unes des autres. Lorsqu'aucune zone de motif rétroéclairée n'est éclairée, la surface externe 8 de la couche de revêtement 2 présente un aspect sensiblement uniforme.

Un procédé de réalisation d'un élément de garnissage 1 tel que décrit ci-dessus va à présent être décrit.

Les différents éléments de l'élément de garnissage 1, à savoir la couche de revêtement 2, le module d'éclairage 4 et le module de commutation 6, sont par exemple réalisés séparément avant d'être assemblés.

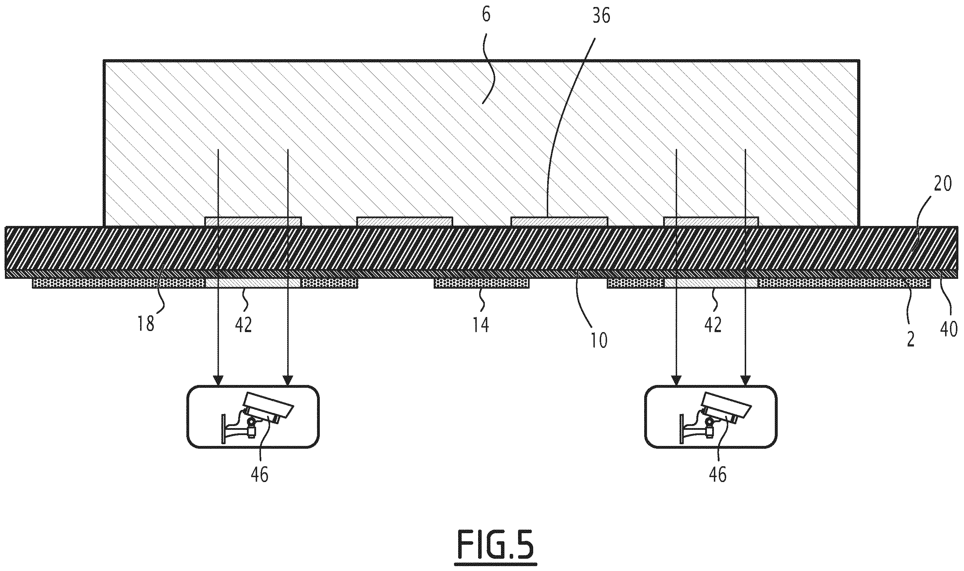

Selon un mode de réalisation, la couche de revêtement 2 est par exemple formée par l'impression de la couche de masquage 14 sur la surface interne de la couche d'aspect 12 pour réaliser les zones de motif rétroéclairées 16 et l'élément translucide 20 est réalisé par injection sur la surface interne de la couche d'aspect 12 et sur la couche de masquage 14. Selon une variante représentée sur les Figs. 5 et 6, la couche de masquage 14 est formée sur la surface externe d'une couche de réception 40 sur l'envers de laquelle l'élément translucide 20 est par exemple réalisé par injection. Selon cette variante, la couche de masquage 14 ne comprend pas de zones de motif rétroéclairées, qui ne seront réalisées qu'après une étape d'alignement avec le module de commutation 6, comme cela va être décrit ultérieurement. Seule au moins une fenêtre 42 est réalisée dans la couche de masquage 14 pour réaliser l'étape d'alignement. De préférence, deux fenêtres 42 sont réalisées.

Le module d'éclairage 4 est formé par l'assemblage de la ou des sources de lumière 22 sur le circuit de connexion 26, qui est par exemple réalisé par impression sur une couche opaque 30 et/ou une couche réfléchissante 32, la couche opaque 30 étant formée sur un substrat 28. En variante, la ou les sources de lumière 22 sont assemblées sur une carte de circuits imprimés. Le premier guide de lumière 24 et le support 34 sont ensuite réalisés par exemple par injection sur le substrat 28 ou sur la carte de circuits imprimés de sorte que le premier guide de lumière 24 encapsule la ou les sources de lumière 22. Des orifices sont par exemple réalisés dans le support 34 pour le passage des éléments de connexion 38.

Le module de commutation 6 est ensuite assemblé sur le module d'éclairage 4, par exemple par laminage.

Comme indiqué précédemment, l'assemblage du module de commutation 6 avec la couche de revêtement 2 nécessite de positionner les zones d'obturation optique 36 en regard des zones de motif rétroéclairées 16 correspondantes en alignant de façon précise les zones d'obturation 36 et les zones de motif rétroéclairées 16.

Le module de commutation 6 est tout d'abord positionné « grossièrement » par rapport à la couche de revêtement 2 de sorte à positionner les zones d'obturation 36 en regard des zones de motif rétroéclairées 16, sans nécessairement les aligner de façon précise.

Au moins une mire est placée en regard d'une zone de motif rétroéclairée 16, ou d'une fenêtre 42 selon la variante des Figs. 5 et 6, du côté de la surface externe 8 de la couche de revêtement 2. La zone d'obturation optique 36 s'étendant en regard de la zone de motif rétroéclairée 16 ou de la fenêtre 42 recevant la mire est pilotée pour être dans la position ouverte et une source de lumière 44 agencée pour afficher une mire, de la même forme que la mire placée sur la couche de revêtement 2, est utilisée pour éclairer la zone d'obturation optique 36. Un dispositif d'imagerie 46, telle qu'une caméra, est utilisée du côté de la surface externe 8 de l'élément de garnissage pour acquérir au moins une image de la surface externe 8 avec les deux mires et vérifier si celles-ci sont superposées ou non. Si les mires ne sont pas superposées, le module de commutation 6 est déplacé par rapport à la couche de revêtement 2 afin de superposer les mires. Lorsque les mires sont superposées, ce qui peut être vérifié en reproduisant les étapes ci-dessus, le module de commutation 6 est positionné correctement par rapport aux zones de motifs rétroéclairées 16 et la couche de revêtement 2, le module de commutation 6 et le module d'éclairage 4 peuvent être fixés définitivement. De préférence, deux mires sont prévues pour la couche de revêtement 2 pour permettre de régler le positionnement du module de commutation aussi bien selon la longueur de la couche de revêtement que selon sa largeur.

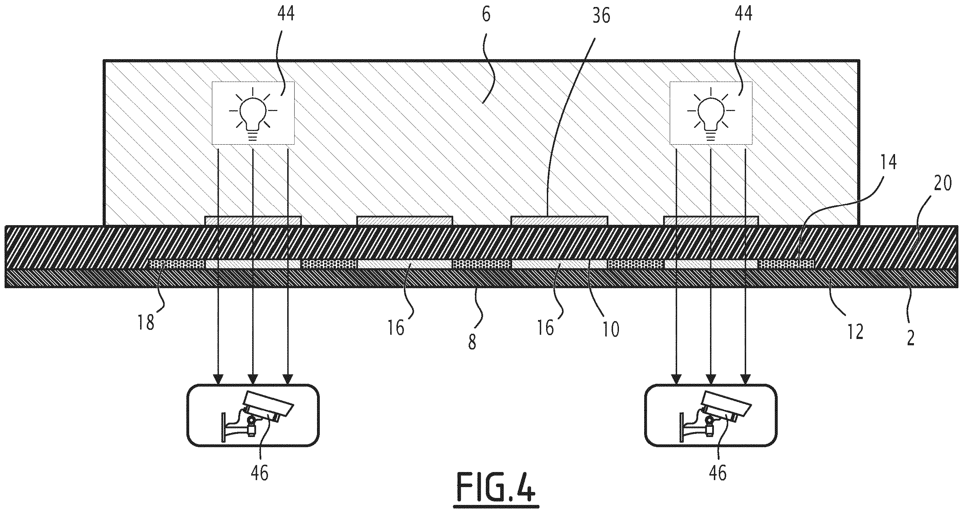

Comme représenté sur les Figs. 4 à 6, l'alignement se fait de préférence avec deux mires disposées sur la couche de revêtement 2 et deux sources de lumière 44 agencées pour afficher des mires correspondantes. Dans ce cas, deux zones d'obturation optique 36 correspondantes sont placées dans la position ouverte. En variante, la source de lumière 22 est utilisée comme unique source de lumière pour afficher les toutes les mires, la lumière étant acheminée à ces mires par le premier guide de lumière 24.

Selon la variante des Figs. 5 et 6, les zones de motif rétroéclairées 16 sont réalisées dans la couche de masquage 14 après l'étape d'alignement décrite ci-dessus par exemple par grattage laser en regard des zones d'obturation optique 36. Une couche d'aspect 12, par exemple formée par un revêtement anti rayures, est ensuite déposées sur la couche de masquage 14, comme représenté sur la Fig. 6.

Le procédé décrit ci-dessus permet d'obtenir un élément de garnissage 1 dont les zones de motif rétroéclairées 16 sont illuminées de façon précise, ce qui permet d'avoir des motifs nets affichés sur la surface externe 2 de la couche de revêtement 2.

## Revendications

1. Elément de garnissage (1) de véhicule, comprenant une couche de revêtement (2) définissant une surface externe (8) et une surface interne (10), opposée à la surface externe (8), ladite couche de revêtement (2) comprenant au moins deux zones de motif rétroéclairées (16) distinctes, dans lesquelles ladite couche de revêtement (2) est au moins en partie translucide de sorte à laisser passer la lumière de la surface interne (10) à la surface externe (8), l'élément de garnissage comprenant en outre au moins un module d'éclairage (4) s'étendant du côté de la surface interne (10) de la couche de revêtement (2), ledit module d'éclairage comprenant au moins une source de lumière (22) et un premier guide de lumière (24) agencé pour guider la lumière de la source de lumière (22) vers les zones rétroéclairées (16) de la couche de revêtement (2), l'élément de garnissage étant **caractérisé en ce qu'**il comprend en outre un module de commutation (6) s'étendant entre la couche de revêtement (2) et le module d'éclairage (4), le module de commutation (6) comprenant au moins deux zones d'obturation optique (36), au moins une zone d'obturation optique (36) s'étendant en regard de chaque zone de motif rétroéclairée (16) de la couche de revêtement (2) et étant configurable entre une position ouverte, dans laquelle ladite zone d'obturation (36) optique laisse passer la lumière du premier guide de lumière (24) du module d'éclairage (4) vers la zone de motif rétroéclairée (16) de la couche de revêtement (2) s'étendant en regard de ladite zone d'obturation optique (36), et une position fermée, dans laquelle ladite zone d'obturation optique (36) empêche le passage de la lumière du premier guide lumière (24) vers la zone de motif rétroéclairée (16) s'étendant en regard de ladite zone d'obturation optique (36).

2. Elément de garnissage selon la revendication 1, dans lequel chaque zone d'obturation optique (36) présente une surface supérieure ou égale à la surface de la zone de motif rétroéclairée (16) s'étendant en regard de ladite zone d'obturation optique (36), chaque zone de motif rétroéclairée (16) étant entourée au moins en partie par une zone opaque (18) empêchant le passage de la lumière de la surface interne à la surface externe (8) de la couche de revêtement (2).

3. Elément de garnissage selon la revendication 1 ou 2, dans lequel la couche de revêtement (2) comprend au moins une couche d'aspect (12) translucide et au moins une couche de masquage (14) s'étendant contre la couche d'aspect (12), ladite couche de masquage (14) comprenant au moins deux ouvertures, présentant chacune la forme d'une des zones de motif rétroéclairées (16) de la couche de revêtement (2), chaque zone d'obturation optique (36) du module de commutation (6) s'étendant en regard d'une ouverture de la couche de masquage (14).

4. Elément de garnissage selon l'une quelconque des revendications 1 à 3, dans lequel un deuxième guide de lumière formé par un élément translucide (20) s'étend contre la surface interne (10) de la couche de revêtement (2), le module de commutation (6) s'étendant contre ledit élément translucide (20) agencé pour guider la lumière passant par ledit module de commutation (6) vers les zones de motif rétroéclairées (16) de la couche de revêtement (2).

5. Elément de garnissage selon l'une quelconque des revendications 1 à 4, comprenant un support (34) s'étendant autour du module d'éclairage (4) et du module de commutation (6), ledit support (34) enrobant une partie du premier guide de lumière (24), ledit support (34) étant réalisé en un matériau réfléchissant.

6. Elément de garnissage selon l'une quelconque des revendications 1 à 5, dans lequel le module d'éclairage (4) est monté sur un substrat (28) comprenant au moins un circuit de connexion électrique (26) de la source lumineuse (22) du module d'éclairage (4), la source lumineuse (22) étant connectée audit circuit de connexion (26).

7. Elément de garnissage selon la revendication 6, dans lequel le module de commutation (6) est en outre connecté au circuit de connexion (26), les zones d'obturation optique (36) étant alimentées électriquement par ledit circuit de connexion électrique (26).

8. Elément de garnissage selon l'une quelconque des revendications 1 à 7, dans lequel la distance entre les deux zones de motif rétroéclairées (16) est sensiblement comprise entre 0,3 mm et 2 mm.

9. Procédé de réalisation d'un élément de garnissage selon l'une quelconque des revendications 1 à 8, comprenant les étapes suivantes :
- réaliser une couche de revêtement (2) comprenant au moins deux zones de motif rétroéclairées (16) distinctes, dans lesquelles ladite couche de revêtement (2) est au moins en partie translucide de sorte à laisser passer la lumière d'une surface interne (10) à une surface externe (8) de la couche de revêtement (2),
- réaliser un module de commutation (6) comprenant au moins deux zones d'obturation optique (36),
- réaliser un module d'éclairage (4) comprenant au moins une source de lumière (22) et un premier guide de lumière (24),
- assembler la couche de revêtement (2), le module de commutation (6) et le module d'éclairage (4) en positionnant au moins une zone d'obturation optique (36) du module de commutation (6) en regard de chaque zone de motif rétroéclairée (16) de la couche de revêtement (2) et en positionnant le premier guide de lumière (24) du module d'éclairage (4) pour que la lumière émise par la source de lumière (2) soit guidée vers les zones de motif rétroéclairées (16) de la couche de revêtement (2) en passant par les zones d'obturation optique (36) du module de commutation (6).

10. Procédé de réalisation selon la revendication 9, dans lequel l'étape de positionnement des zones d'obturation optique (36) du module de commutation (6) en regard des zones de motif rétroéclairées (16) de la couche de revêtement (2) comprend les étapes suivantes :
- placer au moins une zone d'obturation optique (36) en position ouverte, au moins une source de lumière (44) étant agencée pour afficher une mire du côté de la surface externe de la couche de revêtement (2) en passant par ladite zone d'obturation optique (36) en position ouverte,
- placer au moins une mire correspondante en regard d'une zone de motif rétroéclairée (16) de la couche de revêtement (2) s'étendant en regard de la zone d'obturation optique (36) en position ouverte,
- utiliser un dispositif d'imagerie (46) pour acquérir au moins une image de la surface externe (8) de la couche de revêtement (2) pour déterminer si la mire affichée par la source de lumière (44) au travers de la zone d'obturation optique (36) en position ouverte est superposée avec la mire en regard de la zone de motif rétroéclairée (16) correspondante,
- si les mires ne sont pas superposées, déplacer le module de commutation (6) par rapport à la couche de revêtement (2) pour superposer les mires avant de fixer définitivement la couche de revêtement (2), le module de commutation (6) et le module d'éclairage (4).

## Patentansprüche

1. Fahrzeugverkleidungselement (1), umfassend eine Beschichtungsschicht (2), die eine äußere Oberfläche (8) und eine der äußeren Oberfläche (8) gegenüberliegende innere Oberfläche (10) definiert, wobei die Beschichtungsschicht (2) mindestens zwei voneinander verschiedene Zonen (16) mit hinterleuchtetem Muster aufweist, in der die Beschichtungsschicht (2) mindestens teilweise durchscheinend ist, um das Licht von der inneren Oberfläche (10) zu der äußeren Oberfläche (8) durchzulassen, das Verkleidungselement ferner umfassend mindestens ein Beleuchtungsmodul (4), das sich auf der Seite der inneren Oberfläche (10) der Beschichtungsschicht (2) erstreckt, das Beleuchtungsmodul umfassend mindestens eine Lichtquelle (22) und einen ersten Lichtleiter (24), der angeordnet ist, um das Licht von der Lichtquelle (22) zu den hinterleuchteten Zonen (16) der Beschichtungsschicht (2) zu leiten, wobei das Verkleidungselement **dadurch gekennzeichnet, dass** es ferner ein Schaltmodul (6) umfasst, das sich zwischen der Beschichtungsschicht (2) und dem Beleuchtungsmodul (4) erstreckt, das Schaltmodul (6) umfassend mindestens zwei optische Verschlusszonen (36), wobei sich mindestens eine optische Verschlusszone (36) gegenüber jeder Zone (16) mit hinterleuchtetem Muster der Beschichtungsschicht (2) erstreckt und zwischen einer offenen Position, in der die optische Verschlusszone (36) den Lichtdurchgang vom ersten Lichtleiter (24) des Beleuchtungsmoduls (4) zu der Zone (16) mit hinterleuchtetem Muster der Beschichtungsschicht (2), die sich gegenüber der optischen Verschlusszone (36) erstreckt, ermöglicht, und einer geschlossenen Position, in der die optische Verschlusszone (36) den Lichtdurchgang vom ersten Lichtleiter (24) zu der Zone (16) mit hinterleuchtetem Muster, die sich gegenüber der optischen Verschlusszone (36) erstreckt, verhindert, konfigurierbar ist.

2. Verkleidungselement nach Anspruch 1, wobei jede optische Verschlusszone (36) eine Oberfläche aufweist, die größer oder gleich der Oberfläche der sich gegenüber der optischen Verschlusszone (36) erstreckenden Zone (16) mit hinterleuchtetem Muster ist, wobei jede Zone (16) mit hinterleuchtetem Muster mindestens teilweise von einer undurchsichtigen Zone (18) umgeben ist, die das Licht daran hindert, von der inneren Oberfläche zur äußeren Oberfläche (8) der Beschichtungsschicht (2) durchzugehen.

3. Verkleidungselement nach Anspruch 1 oder 2, wobei die Beschichtungsschicht (2) mindestens eine durchscheinende Darstellungsschicht (12) und mindestens eine Maskierungsschicht (14) umfasst, die sich gegenüber der Darstellungsschicht (12) erstreckt, wobei die Maskierungsschicht (14) mindestens zwei Öffnungen aufweist, jede in Form einer der Zonen (16) mit hinterleuchtetem Muster der Beschichtungsschicht (2), wobei sich jede optische Verschlusszone (36) des Schaltmoduls (6) gegenüber einer Öffnung in der Maskierungsschicht (14) erstreckt.

4. Verkleidungselement nach einem der Ansprüche 1 bis 3, wobei ein zweiter Lichtleiter, der aus einem durchscheinenden Element (20) gebildet ist, sich gegen die innere Oberfläche (10) der Beschichtungsschicht (2) erstreckt, wobei das Schaltmodul (6) sich gegen das durchscheinende Element (20) erstreckt und angeordnet ist, um das durch das Schaltmodul (6) hindurchgehende Licht zu den Zonen (16) mit hinterleuchtetem Muster der Beschichtungsschicht (2) zu leiten.

5. Verkleidungselement nach einem der Ansprüche 1 bis 4, umfassend einen Träger (34), der sich um das Beleuchtungsmodul (4) und das Schaltmodul (6) erstreckt, wobei der Träger (34) einen Teil des ersten Lichtleiters (24) umschließt, wobei der Träger (34) aus einem reflektierenden Material hergestellt ist.

6. Verkleidungselement nach einem der Ansprüche 1 bis 5, wobei das Beleuchtungsmodul (4) auf einem Substrat (28) montiert ist, das mindestens eine elektrische Anschlussschaltung (26) für die Lichtquelle (22) des Beleuchtungsmoduls (4) umfasst, wobei die Lichtquelle (22) mit der Anschlussschaltung (26) verbunden ist.

7. Verkleidungselement nach Anspruch 6, wobei das Schaltmodul (6) ferner mit der Anschlussschaltung (26) verbunden ist, wobei die optischen Verschlusszonen (36) durch die elektrische Anschlussschaltung (26) elektrisch versorgt werden.

8. Verkleidungselement nach einem der Ansprüche 1 bis 7, wobei der Abstand zwischen den zwei Zonen (16) mit hinterleuchtetem Muster im Wesentlichen zwischen 0,3 mm und 2 mm beträgt.

9. Verfahren zur Herstellung eines Verkleidungselements nach einem der Ansprüche 1 bis 8, wobei das Verfahren die folgenden Schritte umfasst:
- Herstellen einer Beschichtungsschicht (2), umfassend mindestens zwei voneinander verschiedene Zonen (16) mit hinterleuchtetem Muster, wobei die Beschichtungsschicht (2) mindestens teilweise durchscheinend ist, um das Licht von einer inneren Oberfläche (10) zu einer äußeren Oberfläche (8) der Beschichtungsschicht (2) durchzulassen,
- Herstellen eines Schaltmoduls (6), umfassend mindestens zwei optische Verschlusszonen (36),
- Herstellen eines Beleuchtungsmoduls (4), umfassend mindestens eine Lichtquelle (22) und einen ersten Lichtleiter (24),
- Zusammenbauen der Beschichtungsschicht (2), des Schaltmoduls (6) und des Beleuchtungsmoduls (4) durch Positionieren mindestens einer optischen Verschlusszone (36) des Schaltmoduls (6) gegenüber jeder Zone (16) mit hinterleuchtetem Muster der Beschichtungsschicht (2) und durch Positionieren des ersten Lichtleiters (24) des Beleuchtungsmoduls (4), so dass das von der Lichtquelle (2) emittierte Licht über die optischen Verschlusszonen (36) des Schaltmoduls (6) zu den Zonen (16) mit hinterleuchtetem Muster der Beschichtungsschicht (2) geleitet wird.

10. Herstellungsverfahren nach Anspruch 9, wobei der Schritt des Positionierens der optischen Verschlusszonen (36) des Schaltmoduls (6) gegenüber den Zonen (16) mit hinterleuchtetem Muster der Beschichtungsschicht (2) die folgenden Schritte umfasst:
- Platzieren mindestens einer optischen Verschlusszone (36) in der offenen Position, wobei mindestens eine Lichtquelle (44) angeordnet ist, um über die optische Verschlusszone (36) in der offenen Position ein Testmuster auf der äußeren Oberflächenseite der Beschichtungsschicht (2) anzuzeigen,
- Platzieren mindestens eines entsprechenden Testmusters gegenüber einer Zone (16) mit hinterleuchtetem Muster der Beschichtungsschicht (2), die sich gegenüber der optischen Verschlusszone (36) in der offenen Position erstreckt,
- Verwenden einer Bildgebungsvorrichtung (46), um mindestens ein Bild der äußeren Oberfläche (8) der Beschichtungsschicht (2) zu erfassen, um zu bestimmen, ob das von der Lichtquelle (44) durch die optische Verschlusszone (36) in der offenen Position angezeigte Testmuster dem Testmuster gegenüber der entsprechenden Zone (16) mit hinterleuchtetem Muster überlagert ist,
- wenn die Testmuster nicht überlagert sind, Bewegen des Schaltmoduls (6) relativ zur Beschichtungsschicht (2), um die Testmuster zu überlagern, bevor die Beschichtungsschicht (2), das Schaltmodul (6) und das Beleuchtungsmodul (4) dauerhaft fixiert werden.

## Claims

1. Vehicle trim element (1), comprising a coating layer (2) defining an outer surface (8) and an inner surface (10), opposite the outer surface (8), said coating layer (2) comprising at least two distinct backlit pattern zones (16), in which said coating layer (2) is at least partly translucent so as to let the light pass from the inner surface (10) to the outer surface (8), the trim element further comprising at least one illumination module (4) which extends on the inner surface (10) side of the coating layer (2), said illumination module comprising at least one light source (22) and a first light guide (24) arranged to guide the light from the light source (22) to the backlit zones (16) of the coating layer (2), the trim element being **characterized in that** it further comprises a switching module (6) which extends between the coating layer (2) and the illumination module (4), the switching module (6) comprising at least two optical shutter zones (36), at least one optical shutter zone (36) extending opposite each backlit pattern zone (16) of the coating layer (2) and being configurable between an open position, in which said optical shutter zone (36) allows the light to pass from the first light guide (24) of the illumination module (4) to the backlit pattern zone (16) of the coating layer (2) extending opposite said optical shutter zone (36), and a closed position, in which said optical shutter zone (36) prevents the light from passing from the first light guide (24) to the backlit pattern zone (16) extending opposite said optical shutter zone (36).

2. Trim element according to claim 1, wherein each optical shutter zone (36) has a surface area greater than or equal to the surface area of the backlit pattern zone (16) extending opposite said optical shutter zone (36), each backlit pattern zone (16) being surrounded at least partly by an opaque zone (18) preventing the light from passing from the inner surface to the outer surface (8) of the coating layer (2).

3. Trim element according to claim 1 or 2, wherein the coating layer (2) comprises at least one translucent appearance layer (12) and at least one masking layer (14) which extends against the appearance layer (12), said masking layer (14) comprising at least two apertures, each in the form of one of the backlit pattern zones (16) of the coating layer (2), each optical shutter zone (36) of the switching module (6) extending opposite an aperture in the masking layer (14).

4. Trim element according to any of claims 1 to 3, wherein a second light guide formed by a translucent element (20) extends against the inner surface (10) of the coating layer (2), the switching module (6) extending against said translucent element (20) arranged to guide the light passing through said switching module (6) to the backlit pattern zones (16) of the coating layer (2).

5. Trim element according to any of claims 1 to 4, comprising a support (34) which extends around the illumination module (4) and the switching module (6), said support (34) encapsulating part of the first light guide (24), said support (34) being made of a reflective material.

6. Trim element according to any of claims 1 to 5, wherein the illumination module (4) is mounted on a substrate (28) comprising at least one electrical connection circuit (26) for the light source (22) of the illumination module (4), the light source (22) being connected to said connection circuit (26).

7. Trim element according to claim 6, wherein the switching module (6) is further connected to the connection circuit (26), the optical shutter zones (36) being electrically supplied by said electrical connection circuit (26).

8. Trim element according to any of claims 1 to 7, wherein the distance between the two backlit pattern zones (16) is substantially between 0.3 mm and 2 mm.

9. Method for producing a trim element according to any of claims 1 to 8, said method comprising the following steps:
- producing a coating layer (2) comprising at least two distinct backlit pattern zones (16), in which said coating layer (2) is at least partly translucent so as to let the light pass from an inner surface (10) to an outer surface (8) of the coating layer (2),
- producing a switching module (6) comprising at least two optical shutter zones (36),
- producing an illumination module (4) comprising at least one light source (22) and a first light guide (24),
- assembling the coating layer (2), the switching module (6) and the illumination module (4) by positioning at least one optical shutter zone (36) of the switching module (6) opposite each backlit pattern zone (16) of the coating layer (2) and by positioning the first light guide (24) of the illumination module (4) so that the light emitted by the light source (2) is guided to the backlit pattern zones (16) of the coating layer (2) via the optical shutter zones (36) of the switching module (6).

10. Production method according to claim 9, wherein the step of positioning the optical shutter zones (36) of the switching module (6) opposite the backlit pattern zones (16) of the coating layer (2) comprises the following steps:
- placing at least one optical shutter zone (36) in the open position, at least one light source (44) being arranged to display a test pattern on the outer surface side of the coating layer (2) via said optical shutter zone (36) in the open position,
- placing at least one corresponding test pattern opposite a backlit pattern zone (16) of the coating layer (2) extending opposite the optical shutter zone (36) in the open position,
- using an imaging device (46) to acquire at least one image of the outer surface (8) of the coating layer (2) to determine whether the test pattern displayed by the light source (44) through the optical shutter zone (36) in the open position is superimposed with the test pattern opposite the corresponding backlit pattern zone (16),
- if the test patterns are not superimposed, moving the switching module (6) relative to the coating layer (2) to superimpose the test patterns before permanently fixing the coating layer (2), the switching module (6) and the illumination module (4).
